(19) Europäisches Patentamt

European Patent Office

Office européen des brevets

(11) EP 1 572 793 B1

(12) **EUROPEAN PATENT SPECIFICATION**

(45) Date of publication and mention
of the grant of the patent:
**29.11.2006 Bulletin 2006/48**

(21) Application number: **03814121.4**

(22) Date of filing: **16.12.2003**

(51) Int Cl.:
**C08K 3/00** $^{(2006.01)}$

(86) International application number:
**PCT/US2003/040243**

(87) International publication number:
**WO 2004/058916 (15.07.2004 Gazette 2004/29)**

(54) **HIGH TEMPERATURE LCP FOR WEAR RESISTANCE**

HOCHTEMPERATUR-LCP FÜR ABRIEBFESTIGKEIT

LCP A HAUTE TEMPERATURE RESISTANT A L'USURE

(84) Designated Contracting States:
**AT BE BG CH CY CZ DE DK EE ES FI FR GB GR
HU IE IT LI LU MC NL PT RO SE SI SK TR**

(30) Priority: **18.12.2002 US 434261 P**

(43) Date of publication of application:
**14.09.2005 Bulletin 2005/37**

(73) Proprietor: **E.I. DU PONT DE NEMOURS AND
COMPANY
Wilmington, DE 19898 (US)**

(72) Inventor: **BLOOM, Joy, Sawyer
Wilmington, DE 19810 (US)**

(74) Representative: **Morf, Jan Stefan et al
Abitz und Partner,
Poschingerstrasse 6
D-81628 München (DE)**

(56) References cited:
**EP-A- 0 271 326        EP-A- 0 406 941
EP-A- 0 430 640        EP-A- 1 314 760
DE-A- 10 213 561**

**Description**

## FIELD OF THE INVENTION

The present invention relates to a polyester composition and article having high wear resistance. More particularly, the present invention relates to high temperature liquid crystalline polymers (LCPs) containing lubricating fillers for good to excellent wear resistance.

## BACKGROUND OF THE INVENTION

Liquid crystalline polymers (LCPs) are used in a variety of applications including molding resins. LCPs are used in a variety of applications because they have desirable (combination of) properties that other polymers have been unable to match. Many LCPs have good high temperature properties that are useful, for example from 250°C to about 320°C. Some LCPs have claimed to be useful at higher temperatures but these have often had other drawbacks, such as poor processability, poor dimensional stability and/or poor thermal stability at their melt processing and/or use temperatures. Thus, LCPs with improved high temperature properties such as dimensional stability are of interest. Hence, it is desirable to have high temperature.LCPs with good to excellent wear resistance at elevated PVs (pressure x velocity).

The following disclosures may be relevant to various aspects of the present invention and may be briefly summarized as follows:

US Pat. No. 5, 789,523 to George et al. discloses polyimide compositions that can be substantially improved by incorporating into the composition an inorganic, low hardness, thermally stable, sheet silicate, such as muscovite mica, talc and kaolinite, which results in improved wear resistance and reduced coefficient of friction. This patent discloses a blend material and does not disclose particulate polyimide.

U.S. Patent No. 5,470,922 to Kaku et al. discloses polymeric blends of polyimide precursor resins and polyamides or polyesters, preferably in the form of liquid crystal polymers, provide polyimide products with excellent physical characteristics and injection molding capability. This patent does not disclose high temperature LCPs.

U.S. Patent No. 5,312,866 to Tsutsumi et al. discloses a molding resin composition comprising 99.9 to 50% by weight of polyimide material and 0.1 to 50% by weight of PEK (polyether ketone) resin and/or polyester resin, and more particularly comprising the polyester resin capable of forming an anistropical molten phase at a temperature of 420°C or less and a polyimide-based molding resin composition which comprises the said resins and other additives such as phenolic resin, fluororesin, graphite, carbon fibers, aromatic polyamide fibers, potassium titanate fibers and a crystallization accelerator, and is excellent in thermal resistance, chemical resistance, mechanical strength and processability.

US Patent No. 5,004,497 to Shibata et al. discloses a friction material containing 0.85 to 30 weight % carbon fibers and 2 to 20 weight % of aramid fibers. This friction material offers advantages in high temperature stability of the coefficient of friction, a favorable wear property, freedom from sticking and uneven wears, and superior anti-fade properties. This patent discloses a thermoset matrix material.

## SUMMARY OF THE INVENTION

Briefly stated, and in accordance with one aspect of the present invention, there is provided a composition comprising a liquid crystalline polyester (LCP) as a matrix material having an onset of melting temperature of greater than 320°C containing at least two lubricating fillers, wherein said composition having an onset of melting temperature of at least 320°C and wear resistance of at least 1.75 MPa-m/s (50,000 psi-fpm),
wherein said liquid crystalline polyester material has repeat units derived from 4-hydroxybenzoic acid, 4,'4-biphenol, terephthalic acid, and one or both of 2,6-naphthalenedicarboxylic acid and isophthalic acid and
wherein at least one filler is a graphite material and the at least second filler is a carbon fiber material.

While the present invention will be described in connection with a preferred embodiment thereof, it will be understood that it is not intended to limit the invention to that embodiment.

## DETAILED DESCRIPTION OF THE INVENTION

In the present invention, high temperature liquid crystalline polymers (LCPs) containing lubricating fillers are able to maintain "good" to "excellent" wear resistance at PVs of at least 1.75 MPa. For purposes of this application, those LCPs having an onset of melting temperature of at least 320°C are considered high temperature LCPs. Additionally, for purposes of this application, the following Chart 1 defines the classifications of wear resistance (e.g. "good", "excellent", etc.) in terms of Wear Factor:

| Chart 1: | |
|---|---|
| **Wear Resistance Classification** | **Wear Factor (cc-s/m-kg-hr) x 10$^{-6}$** |
| Excellent | Less than 50 |
| Good to Moderate | Less than 100 |
| Marginal | 100-120 |
| Unacceptable | Greater than 120 |

The lubricating fillers for use in the present invention include graphite, carbon fiber, fluoropolymer, molybdenum disulfide, mica, talc, zinc oxide, tungsten carbide, silicone, carbon black, particulate polyimide, boron nitride, aramid, potassium titanate, barium titanate, and polytetrafluoroethylene (PTFE), and combinations thereof.

A wide variety of polyimides are suitable for use according to the invention, including those described in U.S. patent No. 3, 179,614, the teachings of which are incorporated herein by reference. The polyimides described therein are prepared from at least one diamine and at least one anhydride. Preferred diamines, which can be used, include m-phenylene diamine (MPD), p-phenylene diamine (PPD), oxydianiline (ODA), methylene dianiline (MDA), and toluene diamine (TDA). Preferred anhydrides, which can be used to include benzophenone tetracarboxylic dianhydride (BTDA), biphenyl dianhydride (BPDA), trimellitic anhydride (TMA), pyromellitic dianhydride (PMDA), maleic anhydride (MA), and nadic anhydride (NA).

Preferred polyimides include those prepared from the following combinations of anhydride and diamine: BTDA-MPD, MA-MDA, BTDA-TDA-MPD, BTDA-MDA-NA, TMA-MPD & TMA-ODA, BPDA-ODA, BPDA-MPD, BPDA-PPD, BTDA-4,4'-diaminobenzophenone, and BTDA-bis(p-Phenoxy)-p,p'biphenyl. An especially satisfactory polyimide useful in the present invention is that prepared from pyromellitic dianhydride and 4,4'-oxydianiline (PMDA-ODA).

The polyester matrix material is a liquid crystalline polymer (LCP) having repeat units derived from 4-hydroxybenzoic acid, 4,'4-biphenol, terephthalic acid, and one or both of 2, 6-naphthalenedicarboxylic acid and isophthalic acid.

An embodiment of the present invention is for the LCP matrix to contain two lubricating fillers as shown in Table 6. A preferable embodiment of the present invention is an LCP matrix material containing at least three lubricating fillers for good to excellent wear resistance as defined in Chart 1. An example of three lubricating fillers, but not limited to, in this embodiment includes the use of mica, graphite and carbon fiber in the LCP matrix material. A most preferred embodiment of the present invention contains four lubricating fillers in an LCP matrix for good to excellent wear resistance as defined in Chart 1. An example of four lubricating fillers, but not limited to, in this embodiment includes the use of mica, graphite, particulate polyimide and carbon fiber in the LCP matrix material.

Articles requiring good to excellent wear resistance are another embodiment of the present invention. Typical articles include, but are not limited to, bearings, gears, bushings and brush washers.

The present invention is further illustrated by the following Examples in which parts and percentages are by weight unless otherwise indicated. In the Examples wear specimens were prepared by machining test blocks of the composition described. A 6.35mm (0.25") wide contact surface of a wear/friction test block was machined to such a curvature that it conformed to the outer circumference of a 35mm (1.38") diameter X 9.74mm (0.34") wide metal mating ring. The blocks were oven dried and maintained over desiccant until tested.

## EXAMPLES

The Tm (i.e. melting temperature) and the onset of melting temperature were determined using a 25 °C/minute heating rate with either a DuPont Model 1090 Dual Sample Differential Scanning Calorimeter or a TA Instruments Model 2010 Differential Scanning Calorimeter by ASTM D3418. The LCP of the present invention having an onset melting point of at least 320°C. The melting point is taken as the peak of the melting endotherm on the second heat when measured by Differential Scanning Calorimetry.

**Table 1: Onset of Melting and Tm**

| LCP | Onset (°C) | Tm (°C) |
|---|---|---|
| Zenite® 4000 | 250 | 323 |
| Zenite® 6000 | 286 | 337 |
| Zenite® 7000 | 285 | 348 |

(continued)

| LCP | Onset (°C) | Tm (°C) |
|---|---|---|
| Zenite® 9100 | 303 | 318 |
| Sumitomo® E5000 | 332 | 399 |
| Xydar® RC-210B | 351 | 407 |
| Zenite® 9900HT | 364 | 434 |

In addition to the LCP materials in Table 1, Cypek® HT-M (manufactured by Cytec Industries, Inc.) was tested in order to provide a comparison of a non-LCP matrix material to an LCP matrix material, in the present invention. Cypek® HT-M is a polyether ketone ketone (PEKK) and has an onset of melting temperature of 334°C and a Tm of 358°C.

Wear tests were performed using a Falex No.1 Ring and Block Wear and Friction Tester. The equipment is described in ASTM Test Method D2714. After weighing, the dry block was mounted against the rotating metal ring and loaded against it with the selected test pressure. Rotational velocity of the ring was set at the desired speed. No lubricant was used between the mating surfaces. The rings were SAE 4620 steel, Rc 58-63, 6-12 RMS. A new ring was used for each test. Test time was 24 hours, except when friction and wear were high, in which case the test was terminated early. The friction force was recorded continuously. At the end of the test time, the block was dismounted, weighed and the wear calculated by the following calculation for Wear Factor:

$$\text{Wear volume (cc-s/m-kg-hr)} = \text{weight loss (grams)}/(\text{material density (g/cc)} \times \text{test duration (hr)} \times \text{load (kg)} \times \text{velocity (m/s))}.$$

A low number is desired for Wear Factor and a low number or narrow range is desired for the Coefficient of Friction. Coefficient of Friction is preferably <0.20. When a sample is considered to have failed the wear test, melting of the sample is observed such that no usable weight loss can be calculated.

### Example 1:

In Example 1, sixty-five (65) Weight percent of a liquid crystalline polyester (Zenite® 9900HT manufactured by DuPont) was blended with 10 weight percent of 4767 synthetic graphite (manufactured by Asbury Graphite Mills, Inc.), 10 weight percent of Amoco VMX26 (i.e. manufactured by Amoco) milled carbon fiber, 5 weight percent of mica (Alsibronz 10 manufactured by Engelhard Corp.) and 10 weight percent of a particulate polyimide resin (e.g. Vespel® SP-1 manufactured by DuPont). The blending was accomplished using a 30-mm twin screw extruder with barrels set to 390°C for zones 2 to 5, 385°C for zones 6 to 9 and the die at 410°C having vent ports in zones 4 and 8. Quenching was accomplished using a water spray. The strand was cut into pellets using a standard rotating blade cutter. The pellets were molded into standard 6.4mm thick ASTM (D-638) tensile test bars using a 170g capacity, 145-ton clamping pressure injection-molding machine. The profile was as follows: Rear 370°C, Center 400°C, Front 405°C and Nozzle 405°C. The mold was set to 130°C. The injection conditions were Boost 1 sec, Injection 15 sec, Hold 15 sec, Injection Pressure 3.4 MPa, Ram Speed fast, Screw Speed 120 rpm and Back Pressure minimum. The samples were made into test specimens by machining. Wear testing was done at PV (pressure x velocity) as indicated in Table 2. The results of Sample No.1 show "excellent" wear resistance (see Chart 1). At a PV of 1.75 MPa-m/s (50,000 psi-fpm) the wear factor indicates "excellent" wear resistance. Even more surprising, is that at a PV of 3.5 MPa-m/s (100,000 psi- fpm) the wear factor still indicates "excellent" wear resistance (less than 50 x10$^{-6}$ cc-s/m-kg-hr) for a matrix material of Zenite ® 9900HT with an onset of melting temperature of 364°C. Normally at a PV of 3.5 MPa-m/s (100,000 psi- fpm), failure is expected due to the inability of the polymer to withstand thermal build up caused by the combination of frictional forces, load, and velocity and thus, melting occurs. It is believed the combination of the high temperature LCP with the lubricating fillers provide "excellent" wear resistance at this PV level.

**Table 2**

| Sample No. | PV (MPa-m/s) | Wear Factor (cc-s/m-kg-hr) x 10$^{-6}$ | Coefficient of Friction |
|---|---|---|---|
| 1 | 1.75 | 23.6 | 0.14 |

(continued)

| Sample No. | PV (MPa-m/s) | Wear Factor (cc-s/m-kg-hr) x 10⁻⁶ | Coefficient of Friction |
|---|---|---|---|
| 1 | 3.5 | 25.2 | 0.13 |

## Example 2:

In Example 2, sixty-five (65) weight percent of a liquid crystalline polyester (DuPont Zenite® 7000) was blended with 10 weight percent of 4767 synthetic graphite (Asbury), 10 weight percent of Amoco VMX26 milled carbon fiber (Amoco), 5 weight percent of mica (Alsibronz 10 (Engelhard)) and 10 weight percent of a particulate polyimide resin (DuPont Vespel® SP-1). The blending was accomplished using a 30-mm twin screw extruder with barrels set to 320°C and the die at 335°C having vent ports in zones 4 and 8. Quenching was accomplished using a water spray. The strand was cut into pellets using a standard rotating blade cutter. The pellets were molded into standard 6.4mm thick ASTM (D638) tensile test bars using a 170g capacity, 145-ton clamping pressure injection-molding machine. The profile was as follows: Rear 335 °C, Center 340°C, Front 340 °C and Nozzle 345 °C. Boost 1.5 sec, Injection 5 sec, Hold 15 sec, Injection Pressure 5.5 MPa, Ram Speed fast, Screw Speed 115 rpm and Back Pressure 0.3 MPa. The samples were made into test specimens by machining. Wear testing was done at PV (pressure x velocity) as indicated in Table 3.

In Table 3, Zenite® 7000 (DuPont) was used as the matrix material and showed "excellent" wear resistance at PVs of: 1.75 MPa-m/s (50,000 psi-fpm) and 2.63 MPa-m/s (75143 psi- fpm). However, at 3.5 MPA-m/s (100,000 psi-fpm) the sample melted. Zenite® 7000 (DuPont) has an onset temperature of 285°C, which is below that of high temperature LCPs of the present invention (i.e. 320°C).

### Table 3

| Sample No. | PV (MPa-m/s) | Wear Factor (cc-s/m-kg-hr) x 10⁻⁶ | Coefficient of Friction |
|---|---|---|---|
| 2 | 1.75 | 30.7 | 0.07 |
| 2 | 2.63 | 27.4 | 0.075 |
| 2 | 3.5 | Melted | Melted |

## Example 3:

The same method of sample preparation, used in Example 1, was utilized in Example 3. Sixty-five (65) weight percent of a liquid crystalline polyester (E5000 manufactured by Sumitomo) was blended with 10 weight percent of 4767 synthetic graphite (Asbury), 10 weight percent of Amoco VMX26 milled carbon fiber (Amoco), 5 weight percent of mica (Alsibronz 10 (Engelhard)) and 10 weight percent of a particulate polyimide resin (DuPont Vespel® SP-1). Wear testing was done at PV (pressure x velocity) as indicated in Table 4. In Sample 3, the "excellent" wear resistance is maintained at 1.75 MPa-m/s and 3.5 MPa-m/s as in Example 1. The matrix material is Sumitomo E5000 and has an onset of melting temperature of 332°C. These results show that a matrix material with an onset of melting temperature of greater than 320°C yields "excellent" wear resistance. It is further believed that the lubricating fillers in combination with the high temperature matrix material provide "excellent" wear resistance.

### Table 4

| Sample No. | PV (MPa-m/s) | Wear Factor (cc-s/m-kg-hr) x 10⁻⁶ | Coefficient of Friction |
|---|---|---|---|
| 3 | 1.75 | 23.6 | 0.092 |
| 3 | 3.5 | 28.4 | 0.092 |

## Example 4:

The same method for sample preparation used in Example 2 was also used in Example 4. Sixty-five 65 weight percent of the liquid crystalline polyester Zenite® 9100 (DuPont) was blended with 10 weight percent of 4767 synthetic graphite (Asbury), 10 weight percent of Amoco VMX26 milled carbon fiber (Amoco), 5 weight percent of mica (Alsibronz 10 (Engelhard)) and 10 weight percent of a particulate polyimide resin (Vespel® SP-1 (DuPont)). Wear testing was done at the PVs indicated in Table 5.

Sample 4, shows "good" wear resistance (see Chart 1) at 1.75 MPa-m/s and failure at 3.5 MPa-m/s. The matrix material has an onset melting temperature of 303°C, which is below the 320°C of the present invention.

**Table 5**

| Sample No. | PV (MPa-m/s) | Wear Factor (cc-s/m-kg-hr) x 10⁻⁶ | Coefficient of Friction |
|---|---|---|---|
| 4 | 1.75 | 51.8 | 0.21 |
| 4 | 3.5 | Melted | Melted |

**Example 5:**

70 weight percent of Aurum® JCL-3010 resin (manufactured by Mitsui Chemical Co.) and 10 weight percent of Aurum® JCL-3030 resin (Mitsui) were blended with polymers using the same methodology as in Example 1. The Aurum® resins are self-lubricating, carbon fiber filled thermoplastic polyimides. This example shows a blended thermoplastic polyimide and LCP matrix material containing two lubricant filler materials one of which is carbon fiber. Wear testing was done at a PV of 3.5 MPa-m/s and the results are reported in Table 6.

The choices of LCP and the resins to blend are critical in obtaining desired wear resistance. This is shown by the results of Table 6. The wear testing was conducted at a PV of 3.5 MPa-m/s (100,000 psi- fpm) for the LCP materials listed in Table 6. Samples 7 and 8 show "excellent" wear resistance at this PV while the remainder of the samples in Table 6 failed. The LCPs blended in Samples 7 and 8 with Aurum® each had an onset of melting temperature above 320°C. Samples 5 and 6 failed and each of the materials blended with the Aurum® resin (Mitsui) had an onset of melting temperature below that of the present invention (<320°C). Sample 9 shows that blending with a non-LCP having an onset of melting temperature of at least 320°C is not adequate to achieve good to excellent wear resistance. The PEKK material in Sample 9 has an onset of melting temperature of 334°C.

The results show that the samples that failed could not handle the thermal and dimensional demands of the high PVs even in a high temperature matrix such as Aurum® resins (Mitsui) (~388°C Tm). The use of a high temperature LCP with lubricating fillers achieves the desired wear resistance.

**Table 6**

| Sample No. | Liquid Crystalline Polyester | Wear Factor (cc-s/m-kg-hr) x10⁻⁶ | Coefficient of Friction |
|---|---|---|---|
| 5 | Zenite® 7000 | Melted | Melted |
| 6 | Zenite® 9100 | Melted | Melted |
| 7 | Zenite® 9900HT | 48.5 | 0.21 |
| 8 | Sumitomo® E5000 | 38.6 | 0.13 |
| 9 | Cypek® HT-M | Melted | Melted |

**Example 6:**

The same method for sample preparation as used in Example 1 was utilized in Example 6. Seventy (70) weight percent of a liquid crystalline polyester (Sumitomo E5000) was blended with 10 weight percent of 4767 synthetic graphite (Asbury), 5 weight percent of Panex® 33MF milled carbon fiber (manufactured by Zoltek®) and 10 weight percent of mica (Alsibronz 10 (Engelhard)). Wear testing was done at the PV (pressure x velocity) indicated in Table 7. This sample provides an illustration showing that the matrix material having three fillers had "excellent" wear resistance at a PV of 1.75 MPa-m/s (50,000 psi- fpm).

**Table 7**

| Sample No. | PV (MPa-m/s) | Wear Factor (cc-s/m-kg-hr) x 10⁻⁶ | Coefficient of Friction |
|---|---|---|---|
| 10 | 1.75 | 30 | 0.14 |

It is therefore, apparent that there has been provided in accordance with the present invention, a high temperature liquid crystalline polyester composition that provides high wear resistance at PVs of at least 1.75 MPa-m/s (50,000 psi- fpm) that fully satisfies the aims and advantages hereinbefore set forth. While this invention has been described in conjunction with a specific embodiment thereof, it is evident that many alternatives, modifications, and variations will be apparent to those skilled in the art. Accordingly, it is intended to embrace all such alternatives, modifications and variations that fall within the spirit and broad scope of the appended claims.

## Claims

1.  A composition comprising a liquid crystalline polyester (LCP) as a matrix material having an onset of melting temperature of greater than 320°C containing at least two lubricating fillers, wherein said composition having an onset of melting temperature of at least 320°C and wear resistance at conditions of at least 1.75 MPa-m/s (50,000 psi- fpm), wherein said liquid crystalline polyester material has repeat units derived from 4-hydroxybenzoic acid, 4,'4-biphenol, terephthalic acid, and one or both of 2,6-naphthalenedicarboxylic acid and isophthalic acid and wherein at least one filler is a graphite material and the at least second filler is a carbon fiber material.

2.  A composition according to claim 1, further comprising a third filler, said third filler being 1-20% by weight.

3.  A composition according to claim 2, wherein said third filler is a mica material.

4.  A composition according to any of the preceding claims, further comprising a fourth filler, wherein said fourth filler being 0-15% by weight.

5.  A composition according to claim 4, wherein said fourth filler is a particulate polyimide.

6.  A composition according to any of the preceding claims, wherein said liquid crystalline polyester material being 65% by weight contains four fillers wherein said fillers comprise: (A) 10% by weight of graphite; (B) 10% by weight carbon fiber; (C) 5% by weight mica; and (D) 10 % by weight of particulate polyimide.

7.  A composition according to any of the preceding claims, wherein the composition has at least good wear resistance at conditions of at least 1.75 MPa-m/s (50,000 psi-fpm).

8.  An article made from a composition according to any one of the preceding claims.

## Patentansprüche

1.  Zusammensetzung umfassend einen flüssigen kristallinen Polyester (FKP) als Matrixmaterial, die ein Einsetzen der Schmelztemperatur bei mehr als 320 °C aufweist, enthaltend mindestens zwei schmierende Füllstoffe, wobei die Zusammensetzung ein Einsetzen der Schmelztemperatur bei mindestens 320 °C und eine Verschleißbeständigkeit unter Bedingungen von mindestens 1,75 MPa-m/s (50.000 psi-fpm) aufweist, wobei das flüssige kristalline Polyestermaterial sich wiederholende Einheiten aufweist, die von 4-Hydroxybenzoesäure, 4,'4-Biphenol, Terephthalsäure und von einer oder beiden von 2,6-Naphthalindicarbonsäure und Isophthalsäure deriviert sind und wobei mindestens ein Füllstoff ein Graphitmaterial und der mindestens zweite Füllstoff ein Kohlefasermaterial ist.

2.  Zusammensetzung nach Anspruch 1, des Weiteren umfassend einen dritten Füllstoff, wobei der dritte Füllstoff 1 - 20 Gew.-% beträgt.

3.  Zusammensetzung nach Anspruch 2, wobei der dritte Füllstoff ein Glimmermaterial ist.

4.  Zusammensetzung nach einem der vorhergehenden Ansprüche, des Weiteren umfassend einen vierten Füllstoff, wobei der vierte Füllstoff 0 - 15 Gew.-% beträgt.

5.  Zusammensetzung nach Anspruch 4, wobei der vierte Füllstoff ein teilchenförmiges Polyimid ist.

6.  Zusammensetzung nach einem der vorhergehenden Ansprüche, wobei das flüssige kristalline Polyestermaterial, das 65 Gew.-% beträgt, vier Füllstoffe enthält, wobei die Füllstoffe: (A) 10 Gew.-% Graphit; (B) 10 Gew.-% Kohlefaser; (C) 5 Gew.-% Glimmer; und (D) 10 Gew.-% teilchenförmiges Polyimid enthalten.

7.  Zusammensetzung nach einem der vorhergehenden Ansprüche, wobei die Zusammensetzung unter Bedingungen von mindestens 1,75 MPa-m/s (50.000 psi-fpm zumindest) eine gute Verschleißfestigkeit aufweist.

**8.** Artikel hergestellt aus einer Zusammensetzung nach einem der vorhergehenden Ansprüche.

**Revendications**

**1.** Composition comprenant un polyester à cristaux liquides (PCL) comme matériau matrice ayant une température de début de fusion supérieure à 320°C contenant au moins deux charges lubrifiantes, dans laquelle ladite composition ayant une température de début de fusion d'au moins 320°C et une résistance à l'usure à des conditions d'au moins 1,75 MPa-m/s (50 000 psi-fpm),
dans laquelle ledit matériau polyester à cristaux liquides a des motifs de répétition dérivés de l'acide 4-hydroxybenzoïque, du 4',4-biphénol, de l'acide téréphtalique, et de l'un ou des deux parmi l'acide 2,6-naphtalènedicarboxylique et l'acide isophtalique et
dans laquelle au moins une charge est un matériau de type graphite et la au moins deuxième charge est un matériau de type fibre de carbone.

**2.** Composition selon la revendication 1, comprenant en outre une troisième charge, ladite troisième charge étant de 1 à 20 % en poids.

**3.** Composition selon la revendication 2, dans laquelle ladite troisième charge est un matériau de type mica.

**4.** Composition selon l'une quelconque des revendications précédentes, comprenant en outre une quatrième charge, dans laquelle ladite quatrième charge étant de 0 à 15 % en poids.

**5.** Composition selon la revendication 4, dans laquelle ladite quatrième charge est un polyimide sous forme de particules.

**6.** Composition selon l'une quelconque des revendications précédentes, dans laquelle ledit matériau polyester à cristaux liquides étant de 65 % en poids contient quatre charges dans lequel lesdites charges comprennent : (A) 10 % en poids de graphite ; (B) 10 % en poids de fibre de carbone ; (C) 5 % en poids de mica ; et (D) 10 % en poids de polyimide sous forme de particules.

**7.** Composition selon l'une quelconque des revendications précédentes, dans laquelle la composition a au moins une bonne résistance à l'usure aux conditions d'au moins 1,75 MPa-m/s (50 000 psi-fpm).

**8.** Article fabriqué à partir d'une composition selon l'une quelconque des revendications précédentes.